# EUROPÄISCHE PATENTSCHRIFT

(11) **EP 3 849 915 B1**
(45) Veröffentlichungstag und Bekanntmachung des Hinweises auf die Patenterteilung: **01.11.2023**
(21) Anmeldenummer: 19766203.4
(22) Anmeldetag: 04.09.2019
(51) Int. Cl.: B65D 39/08, B65D 47/06, B65D 47/40

(54) **KUNSTSTOFFBEHÄLTER MIT EINEM AUSGIESSELEMENT**
PLASTIC CONTAINER COMPRISING A POURING ELEMENT
RÉCIPIENT EN PLASTIQUE DOTÉ D'UN ÉLÉMENT DE DÉVERSEMENT

(30) Priorität: 14.09.2018 CH 10882018
(43) Veröffentlichungstag der Anmeldung: 21.07.2021
(73) Patentinhaber: ALPLA Werke Alwin Lehner GmbH & Co. KG, 6971 Hard (AT)
(72) Erfinder: KÜNZ, Johann, 6971 Hard (AT)
(74) Vertreter: Swisspat Riederer Hasler Patentanwälte AG
(86) Internationale Anmeldenummer: PCT/EP2019/073574
(87) Internationale Veröffentlichungsnummer: WO 2020/053044

(56) Entgegenhaltungen:
- WO-A1-00/40475
- WO-A1-98/45207
- WO-A2-2007/092866
- US-A- 4 671 421
- US-A1- 2018 009 580
- US-B1- 10 005 214

## Beschreibung

Die Erfindung betrifft einen Kunststoffbehälter gemäss Oberbegriff des Anspruchs 1 und ein Verfahren zur Herstellung eines Kunststoff-Behälterteils gemäss Oberbegriff des Anspruchs 15.

### Stand der Technik

Aus dem Stand der Technik ist ein blasgeformter Kunststoffbehälter bekannt, welcher ein Ausgiesselement umfasst. Das Ausgiesselement ermöglicht beispielsweise ein verschüttungsfreies Ausgiessen von Flüssigkeiten aus dem Behälter und ermöglicht eine vereinfachte Dosierung. Insbesondere Behälter, welche der Abfüllung von FlüssigWaschmittel dienen sind verbreitet mit einem solchen Ausgiesselement ausgestattet. Dazu besitzt das Ausgiesselement einen Ausgiessstutzen, welcher vom Boden des Ausgiesselements abragt. Der Boden des Ausgiesselements kann auch als eine Tropfrinne ausgebildet sein. An der Aussenseite des Ausgiessstutzens herabfliessende Flüssigkeit kann in der Tropfrinne gesammelt werden. Über eine in der Tropfrinne vorgesehene Öffnung kann die Flüssigkeit zurück in den Behälter fliessen.

Am Hals des Behälters ist ein erstes Aussengewinde ausgeformt. Das Ausgiesselement hat ein Innengewinde ausgebildet, wodurch das Ausgiesselement auf den Behälter aufschraubbbar ist.

Um den Behälter verschliessen zu können, ist am Ausgiesselement ein zweites Innengewinde vorgesehen. Durch Zusammenwirken des zweiten Innengewindes mit einem Aussengewinde eines Drehverschlusses lässt sich der Drehverschluss auf das Ausgiesselement aufschrauben. Dadurch ist ein Verschliessen des Behälters ermöglicht.

Aus der Beschreibung dieses Stands der Technik ist ersichtlich, dass das Ausgiesselement sehr kompliziert aufgebaut ist, insbesondere da es zwei Innengewinde ausgeformt haben muss. Dementsprechend lässt es sich nur mit aufwendigen und folglich sehr teuren Werkzeugen im Spritzgussverfahren herstellen.

In der WO 00/40475 A1 ist ein Kunststoffbehälter gemäß dem Oberbegriff des Anspruchs 1, für Flüssigwaschmittel mit einem in den Behälterhals eingesteckten Ausgiesser beschrieben. Der Ausgiesser hat an seiner Unterseite eine umlaufende Wand, welche in einem Flansch endet. Die Wand wirkt reibschlüssig mit einem an der Innenseite des Behälterhalses ausgeformten Grad zusammen. Der Flansch liegt an der Schulter des Grades auf, wenn der Ausgiesser in den Behälterhals vollständig eingesteckt ist.

In der US 4,671,421 ist ein blasgeformter Kunststoffbehälter mit einem innerhalb des Behälterhalses reibschlüssig gehaltenen Einsatz offenbart. Der Einsatz kann mit dem Behälterhals auch verklebt oder reibverschweisst sein. Da die Herstellung eines Innengewindes an der Innenseite des Behälterhalses schwierig ist, insbesondere um eine zuverlässige Abdichtung mit dem Verschluss herzustellen, ist der Einsatz vorgesehen. Demzufolge ist an dem Einsatz ein entsprechendes Innengewinde vorgesehen, welches mit dem Verschluss zusammenwirkt. Ein Ausgiesser kann mit einem Flansch, ausgebildet an seinem unteren Ende, in eine an dem Einsatz vorgesehene Nut eingesetzt werden.

### Aufgabe der Erfindung

Aufgabe der vorliegenden Erfindung ist es daher, diesen Nachteil des aus dem Stand der Technik bekannten Kunststoffbehälters zu überwinden, indem ein Kunststoffbehälter mit einem verbesserten Ausgiesselement vorgeschlagen werden soll. Dabei soll eine Lösung angestrebt werden, die in den Gesichtspunkten der Benutzerfreundlichkeit und der Dichtfunktion dem Stand der Technik wenigstens ebenbürtig ist.

### Beschreibung

Die Lösung der gestellten Aufgabe gelingt bei einem Kunststoffbehälter mit einem blasgeformtem Behälterteil, einem Ausgiesselement und einem Verschluss durch die im kennzeichnenden Abschnitt des Patentanspruchs 1 angeführten Merkmale. Weiterbildungen und/ oder vorteilhafte Ausführungsvarianten sind Gegenstand der abhängigen Patentansprüche.

Durch die Erfindung wird es ermöglicht, dass das Ausgiesselement im Vergleich zu Ausgiesselementen des Stands der Technik eine vereinfachte und dementsprechend günstige herstellbare Form besitzen kann. Das erste und zweite Haltemittel, welche üblicherweise aufwendig an dem Ausgiesselement bzw. an dem Verschluss ausgeformt werden müssen, sind an der Innenwandung des Behälterhalses ausgebildet und können in einem einzigen Arbeitsschritt gemeinsam und während dem Blasformen des Behälterteils ausgebildet werden. Dadurch lassen sich die gesamten Herstellkosten des erfindungsgemässen Kunststoffbehälters deutlich reduzieren. Außerdem ist bei einem erfindungsgemässen Ausgiesselement der Materialeinsatz um etwa 50% geringer als bei herkömmlichen, aus dem Stand der Technik bekannten Ausgiesselementen.

Die Erfindung zeichnet sich dadurch aus, dass das erste Haltemittel derart ausgebildet ist, dass das erste Haltemittel und das Ausgiesselement formschlüssig verrastbar sind, wobei das erste Haltemittel eine in Umfangsrichtung der Innenwandung verlaufende Nut ist. Die Form des Ausgiesselementes kann für die Befestigung in dem Behälterhals einfach gestaltet sein. Zudem lässt sich das Ausgiesselement sehr rasch durch den Formschluss in dem ersten Haltemittel verrasten. Auf eine teure und für den eigentlichen Einsatzzweck unnötige Schraubverbindung zwischen dem Ausgiesselement und dem Behälterhals kann daher verzichtet werden. Für die Anwendung des Kunststoffbehälters ist ein Abschrauben des Ausgiesselements von dem Behälterhals nämlich nicht erforderlich und daher überflüssig.

In die Nut lässt sich das Ausgiesselement besonders einfach und rasch verrasten. Denkbar ist es auch, dass mehrere, insbesondere zwei Rastvorsprünge über den Umfang des Ausgiesselementes verteilt angeordnet sind, welche mit einer in Umfangsrichtung der Innenwandung verlaufende Nut verrasten. Um ein Ausgießelement mit mehreren Rastvorsprüngen einfach in den Kunststoffbehälter einsetzen zu können, kann es von Vorteil sein, wenn das Innengewinde für den Verschluss nicht umlaufend ausgeführt ist, sondern abschnittsweise Unterbrechungen aufweist, die derart ausgebildet sind, dass beim Einsetzen des Ausgiesselementes in den Kunststoffbehälter die Rastvorsprünge nicht mit den Gewindegängen interagieren, d.h. verrasten können. Die Unterbrechungen bilden somit eine Art Kanäle durch die die Rastvorsprünge geführt werden können, bis diese zur Nut zu gelangen und über diese geschoben werden, um mit dieser Nut zu verrasten.

Alternativ kann anstelle der Unterbrechungen des Innengewindes die an der Innenwandung verlaufende Nut so ausgebildet sein, dass diese sich radial weiter nach innen in Richtung zur Längsachse hin erstreckt als die ununterbrochen umlaufenden Gewindegänge.

Die Erfindung zeichnet sich auch bevorzugt dadurch aus, dass das Ausgiesselement einen ersten zylindrischen Mantel, einen Boden und einen von dem Boden innerhalb des

Mantels abragenden Ausgiessstutzen aufweist, wobei an der Aussenwandung des Mantels ein Rastvorsprung ausgebildet ist, welcher mit der Nut zusammen wirkt wodurch zwischen der Nut und dem Rastvorsprung eine Halterung und eine erste Abdichtung gebildet ist. Das derartig ausgeformte Ausgiesselement lässt sich mit einem einfachen und dementsprechend kostengünstigen Form-Werkzeug beispielsweise im Spritzgiessverfahren herstellen. Der Rastvorsprung ist ein in einem Form-Werkzeug einfach herstellbares und einfach zu entformendes Halteelement. Die Dichtfunktion zwischen der Nut und dem Rastvorsprung ist ausreichend, damit auszugiessendes Füllgut ausschliesslich durch den Ausgiessstutzen fliesst. Da es sich um ein offenes System gegenüber der Umgebung handelt, sind die Drücke, welche auf den Übergang von Nut und Rastvorsprung wirken, gering. Dementsprechend ist die primäre Funktion der Nut und des Rastvorsprungs das Ausgiesselement zuverlässig in dem Behälterhals zu halten. Die Anforderungen an diese erste Abdichtung sind geringer als die Anforderungen an die weiter unten beschriebene zweite Abdichtung zwischen dem Behälterhals und dem Verschluss, weil diese erste Abdichtung lediglich bei geöffnetem Verschluss dafür sorgen muss, dass das Füllgut während dessen Entleerung über die Ausgiessstutzen austritt und nicht zwischen der Innenwandung des Behälters und dem Ausgiesselement.

Durch den Mantel, den Boden und den Ausgiessstutzen ist eine Tropfrinne gebildet. In der Tropfrinne kann sich an der Aussenseite des Ausgiessstutzens anhaftendes Füllgut, insbesondere flüssiges Waschmittel, sammeln. Dadurch wird die Aussenseite des Kunststoffbehälters nicht mit Füllgut verunreinigt und bleibt dauerhaft sauber.

Zweckmässigerweise ist der Boden relativ zur Längsachse des Ausgiesselements schräg gestellt und an dem tiefsten Punkt relativ zu der Längsachse ist eine Rückflussöffnung in dem Boden vorgesehen. Das in der Tropfrinne gesammelte Füllgut kann daher vollständig in den Behälterkörper zurückfliessen und die Aussenoberfläche des Kunststoffbehälters bleibt sauber.

Als vorteilhaft erweist es sich, wenn an dem Boden wenigstens eine Belüftungsöffnung, beispielsweise in Form eines Schlitzes im Boden des Ausgiesselementes vorgesehen ist. Die Belüftungsöffnung ermöglicht es, dass während des Ausgiessens des Füllgutes Umgebungsluft in den Behälterkörper gesaugt werden kann, was zu einem gleichmässigen und unterbrechungsfreien Füllgutstrom führt.

In einer weiteren besonders bevorzugten Ausführungsform der Erfindung ist das zweite Haltemittel ein Innengewinde. Das Innengewinde kann ökonomisch zusammen mit der Nut hergestellt werden, insbesondere durch einen Einfallkern oder auch mittels Schiebeteilen oder Zerfallkernen. Die Nut und das Innengewinde, welche aufwendiger herzustellen sind als die korrespondierenden Haltemittel des Ausgiesselements und des Verschlusses, können daher zusammen in einem Arbeitsschritt hergestellt werden. Dementsprechend einfach können die Form-Werkzeuge, welche das Ausgiesselement herstellen, ausgestaltet sein. Beispielsweise weisen diese Form-Werkzeuge keine Schieber auf, welche notwendig sind, um Hinterschneidungen an den Kunststoffteilen auszubilden. Das Ausgiesselement weist keine komplizierte Formen, beispielsweise Hinterschneidungen, auf. Alternativ kann bei einer Ausführungsform der Erfindung das zweite Haltemittel auch aus einer Schnappwulst, welche an der Innenwandung anstelle der Gewindegänge ausgebildet ist, und aus einem entsprechenden Gegenelement zur Schnappwulst gebildet sein. Das Gegenelement kann durch Schnappnasen gebildet sein, die an dem Verschluss angeformt sind.

In einer weiteren bevorzugten Ausführungsform der Erfindung weist der Verschluss einen zweiten zylindrischen Mantel mit einem offenen und einem verschlossenen Ende auf, wobei an der Aussenwandung des zweiten zylindrischen Mantels ein Aussengewinde ausgebildet ist. Das Aussengewinde wirkt mit dem Innengewinde zusammen. Das Aussengewinde des Verschlusses ist mit einem einfachen kostengünstigen Form-Werkzeug herstellbar. Der Verschluss ist auch als eine Dosiervorrichtung bzw. eine Dosierkappe für das Füllgut verwendbar.

Als zweckdienlich hat es sich erwiesen, wenn ausgehend vom offenen Ende des Behälterhalses zuerst das zweite Haltemittel und dann das erste Haltemittel an der Innenwandung ausgebildet sind. Dadurch ist das Ausgiesselement tiefer in den Behälterhals eingesetzt als der Verschluss. Das Ausgiesselement, welches üblicherweise nur bei der Zusammensetzung des Kunststoffbehälters in den Behälterhals eingesetzt wird und während des Gebrauchs immer mit dem Behälterhals verbunden ist, behindert daher das Auf- und Abschrauben des Verschlusses von dem Behälterhals nicht.

Die Erfindung zeichnet sich auch dadurch aus, dass an der Aussenwandung des zweiten Mantels ein Kragen mit einer ersten im Wesentlichen in Richtung der Innenwandung des Behälterhalses verlaufenden Dichtfläche ausgeformt ist. Die Dichtfläche bildet zusammen mit dem Behälterhals eine erste Dichtung, damit Füllgut nicht aus dem Behälterteil ausfliessen kann. Der Kragen kann bei Anlage an der Innenwandung elastisch nach Innen gedrückt werden. Dadurch entsteht ein Anpressdruck auf die Innwandung, welcher die Dichtfunktion verbessert.

In einer weiteren besonders bevorzugten Ausführungsform der Erfindung ist an dem freien Ende des Kragens ein in Umfangsrichtung verlaufender Flansch ausgeformt. Beim Einschrauben des Versschlusses in den Behälterhals wird der Flansch auf das offene Ende des Behälterhalses gedrückt. Je höher das Einschraubdrehmoment ist, umso höher ist die Dichtfunktion. Das Vorsehen des Flansches ermöglicht neben der ersten Dichtung eine zweite Dichtung, wodurch der Verschluss gegenüber dem Behälterhals doppelt abgedichtet sein kann. Es versteht sich, dass der Flansch auch die Einschraubtiefe des Verschlusses in den Flaschenhals limitiert.

Als vorteilhaft erweist es sich, wenn zwischen dem offenen Ende des Behälterhalses und dem ersten und zweiten Haltemittel an der Innenwandung eine zweite Dichtfläche ausgebildet ist. Die zweite Dichtfläche kann mit genauen Passtoleranzen hergestellt sein, um eine zuverlässige Dichtung zusammen mit der ersten Dichtfläche zu bilden.

Zweckmässigerweise sind die erste und die zweite Dichtfläche derartig bemasst und/ oder zueinander orientiert, dass diese füllgutdicht miteinander korrespondieren und eine zweite Abdichtung bilden. Durch die Wahl der Passtoleranz und des Winkels zwischen den Dichtflächen lässt sich eine Dichtung herstellen, welche ein Ausfliessen des Füllgutes verhindert, auch dann wenn der Kunststoffbehälter liegend gelagert wird oder auf dem Kopf steht.

In einer weiteren besonders bevorzugten Ausführungsform der Erfindung sind das erste und zweite Haltemittel durch Anlage an einem Einfallkern ausgeformt. Der Einsatz eines Einfallkerns lohnt sich bei der Herstellung des Behälterteils, da durch diesen das erste und das zweite Haltemittel gleichzeitig hergestellt werden können. Die Ausbildung der durch das erste und zweite Haltemittel realisierten Strukturen kann daher bei der Herstellung des Ausgiesselements und des Verschlusses entfallen. Dadurch sind diese beiden Teile viel kostengünstiger herstellbar wie vergleichbare Teile des Stands der Technik.

Dadurch, dass die zweite Dichtfläche bevorzugt durch Anlage an einem starren Form-werkzeug ausgeformt ist, kann die zweite Dichtfläche eine sehr genaue Passtoleranz gegenüber der ersten Dichtfläche aufweisen. Solche Dichtflächen können mit einem Einfallkem zumeist nicht hergestellt werden, weil ein Einfallkern mehrteilig ist und sich im Bereich der Stossstellen der einzelnen Kernteile feine Rippen bilden würden, die zu Undichtigkeiten führen. Bevorzugt ist das starre Form-Werkzeug ein Kern mit Fertigungstoleranzen, welche durch die Funktion der zweiten Dichtfläche vorgegeben sind.

Ein weiterer Aspekt der Erfindung betrifft ein Verfahren zur Herstellung eines Kunststoff-Behälterteils gemäss einem der Ansprüche 1-14, einen Behälterkörper und einen Behälterhals aufweisend, wobei der Behälterhals eine Innenwandung und eine Aussenwandung aufweist, nach den folgenden Verfahrensschritten:
- Extrudieren eines Schlauches mit einem Extruder,
- Übergeben des extrudierten Schlauches an eine Blasformwerkzeuganordnung, wobei die Blasform bei der Übergabe des Schlauches - geöffnet ist,
- Einfahren eines Einfallkerns, welcher sich in seiner gespreizten Position befindet,
- Schliessen der Blasform mit Verpressen des zwischen Einfallkern und Blasform befindlichen Abschnitts des Schlauchs, wodurch ein erstes und zweites Haltemittel an der Innenwandung des Behälterhalses ausgeformt wird,
- Aufblasen des Schlauches in der Blasform,
- Öffnen der Blasform und Überführen des Einfallkerns in seine eingefallene Position,
- Ausfahren des Einfallkerns in der eingefallenen Position und
- Entformen des Behälterteils.

Das erfindungsgemässe Verfahren ermöglicht es, dass das erste und das zweite Haltemittel gleichzeitig durch den Einfallkern herstellbar sind und dadurch das erste und zweite Haltemittel Strukturen aufweisen können, welche schwierig zu entformen sind. In einer besonders bevorzugten Ausführungsform der Erfindung wird zusätzlich zu dem Einfallkern ein starres Form-Werkzeug an der Seite des Schlauches, an der der Behälterhals ausgeformt wird, eingefahren und dieses nach Aufblasen des Schlauches ausgefahren, wodurch eine Dichtfläche an der Innenwandung des Behälterhalses ausgeformt wird. Die Dichtfläche kann durch das Vorsehen des starren Form-Werkzeuges mit sehr genauen Fertigungstoleranzen hergestellt werden, welche mit dem Einfallkern nicht erreichbar sind.

Weitere Vorteile und Merkmale ergeben sich aus der nachfolgenden Beschreibung eines Ausführungsbeispiels der Erfindung unter Bezugnahme auf die schematischen Darstellungen. Es zeigen in nicht massstabsgetreuer Darstellung:
- Figur 1:: eine Seitenansicht eines Kunststoffbehälters mit einem Behälterhals und einem aufgeschraubten Verschluss;
- Figur 2:: eine Schnittdarstellung entlang der Linie II-II in der Figur 1, wodurch ein an dem Behälterhals eingesetztes Ausgiesselement sichtbar ist;
- Figur 3:: ein Behälterteil zur Aufnahme eines Füllgutes;
- Figur4:: das Behälterteil aus Figur 3 in einer perspektivischen Ansicht;
- Figur 5:: das Ausgiesselement in einer Seitenansicht;
- Figur 6:: eine Schnittdarstellung entlang der Linie VI-VI in der Figur 5;
- Figur 7:: eine vergrösserte Ansicht des Details VII aus Figur 6;
- Figur 8:: den Verschluss in einer Seitenansicht;
- Figur 9:: eine Schnittdarstellung entlang der Linie XI-XI in der Figur 8;
- Figur 10:: eine vergrösserte Ansicht des Details X aus Figur 9 und
- Figur 11:: eine vergrösserte Ansicht des Details XI aus Figur 9.

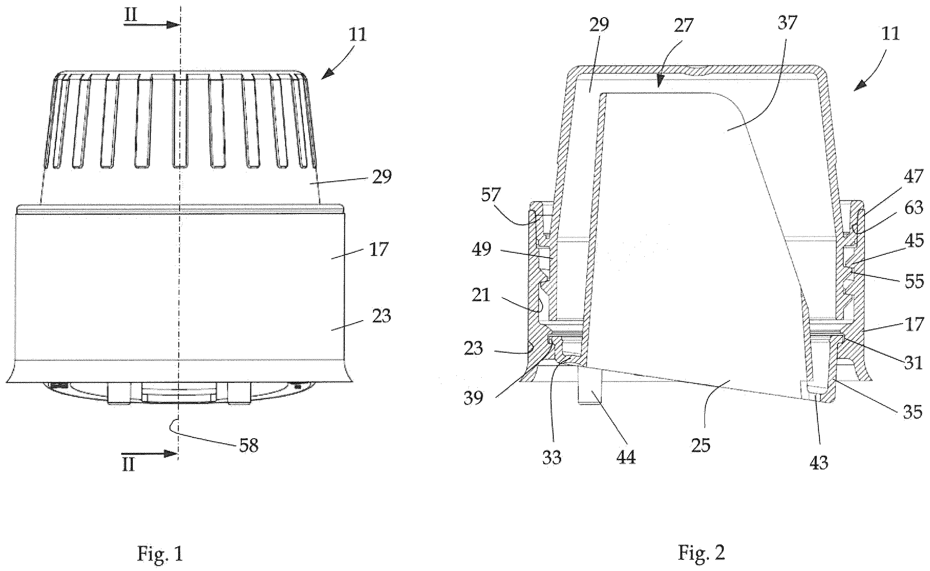

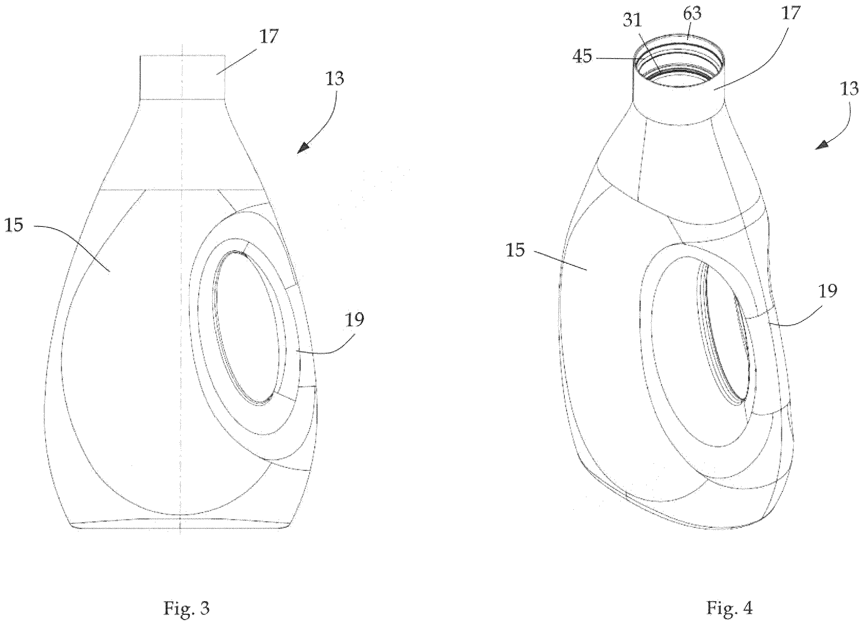

Figur 1 und Figur 2 zeigen einen Halsabschnitt eines gesamthaft mit dem Bezugszeichen 11 bezeichneten Kunststoffbehälters, beispielsweise einer Kunststoffflasche. Der Kunststoffbehälter 11 umfasst ein blasgeformtes Behälterteil 13 mit einem Behälterkörper 15 und einem Behälterhals 17. Der Behälterkörper 15 ist in den Figuren 3 und 4 gezeigt und dient der Aufnahme eines Füllgutes, beispielsweise eines flüssigen Waschmittels. Zum vereinfachten Transportieren und Dosieren des Füllgutes ist an dem Behälterkörper 15 ein Griff 19 ausgebildet. Das Behälterteil 13 ist bevorzugt in einem Extrusionsblasverfahren hergestellt und besteht aus den üblicherweise für dieses Verfahren eingesetzten Kunststoffmaterialien, wie z.B. PE, LDPE, LLDPE, HDPE oder PP oder Mischungen aus diesen Materialen sowie weiters beispielswiese PET-G oder PCT-G. Er kann ein- oder mehrschichtig aufgebaut sein.

Der Behälterhals 17 weist eine Innenwandung 21 und eine Aussenwandung 23 auf. In den Behälterhals 17 ist ein Ausgiesselement 25 eingesetzt. Das Ausgiesselement 25 weist eine Ausgiessöffnung 27 auf, durch welche Füllgut aus dem Behälterkörper 15 ausgegossen bzw. ausgeschüttet werden kann.

Ein Verschluss 29 kann an dem Behälterhals 17 aufgeschraubt werden, wodurch der Kunststoffbehälter 11 verschlossen und die Ausgiessöffnung 27 abgedeckt werden kann und der Übergang zwischen dem Behälterhals 17 und dem Verschluss 29 füllgutdicht ist.

An der Innenwandung 21 ist ein erstes Haltemittel, beispielsweise in Gestalt einer in Umfangsrichtung verlaufenden Nut 31 ausgebildet. Das Ausgiesselement 25 verrastet in der Nut 31 und ist dementsprechend formschlüssig in der Nut 31 gehalten. Diese Art der Befestigung des Ausgiesselements 25 an der Innenwandung 21 hat den besonderen Vorteil, dass das Ausgiesselement 25 eine einfache Form besitzen kann und dementsprechend kostengünstig herstellbar ist

Das Ausgiesselement 25 weist einen Boden 33 auf, welcher an seinem äusseren Rand von einem ersten zylindrischen Mantel 35 begrenzt wird (Figuren 2, 5, 6 und 7). Vom Boden 33 ragt innerhalb des ersten zylindrischen Mantels ein Ausgiessstutzen 37. In dem Ausgiessstutzen 37 ist die eigentliche Ausgiessöffnung 27 vorgesehen. An der Aussenwandung des Mantels 35 ist ein Rastvorsprung 39 ausgebildet. Der Rastvorsprung 39 verläuft in Umfangsrichtung des Mantels 35 und ist bevorzugt durchgängig ausgebildet. Der Rastvorsprung 39 ist derart bemasst, dass er mit der Nut 31 korrespondiert und in diese einsetzbar ist bzw. in dieser verrastet. Zwischen der Nut und dem Rastvorsprung ist eine erste Abdichtung gebildet. Die Dichtfunktion zwischen der Nut 31 und dem Rastvorsprung 39 ist ausreichend, damit auszugiessendes Füllgut ausschliesslich durch den Ausgiessstutzen 37 fliesst. Da es sich um ein offenes System gegenüber der Umgebung handelt, sind die Drücke, welche auf den Übergang von Nut 31 und Rastvorsprung 39 wirken, gering.

In Figur 2 ist erkennbar, dass die Nut 31 sich radial weiter nach innen in Richtung zur Längsachse 58 hin erstreckt als die ununterbrochen umlaufenden Gewindegänge eines Innengewindes 45. Hierdurch kann das Ausgiesselement 25 von oben her in den Behälterhals 17 bis zur Nut 31 eingeführt werden, ohne dass dabei der Rastvorsprung 39 am Innengewinde hängen bleibt oder gar mit den Gewindegängen verrastet.

Alternativ ist denkbar allerdings in den Figuren nicht dargestellt, dass mehrere, insbesondere zwei Rastvorsprünge über den Umfang des Ausgiesselementes verteilt angeordnet sind, welche mit einer in Umfangsrichtung der Innenwandung verlaufende Nut verrasten. Um ein Ausgießelement mit mehreren Rastvorsprüngen einfach in den Kunststoffbehälter einsetzen zu können, kann es von Vorteil sein, wenn das Innengewinde für den Verschluss nicht umlaufend ausgeführt ist, sondern abschnittsweise Unterbrechungen aufweist, die derart ausgebildet sind, dass beim Einsetzen des Ausgiesselementes in den Kunststoffbehälter die Rastvorsprünge nicht mit den Gewindegängen interagieren, d.h. verrasten können. Die Unterbrechungen bilden somit eine Art Kanäle durch die die Rastvorsprünge geführt werden können, bis diese zur Nut zu gelangen und über diese geschoben werden, um mit dieser Nut zu verrasten.

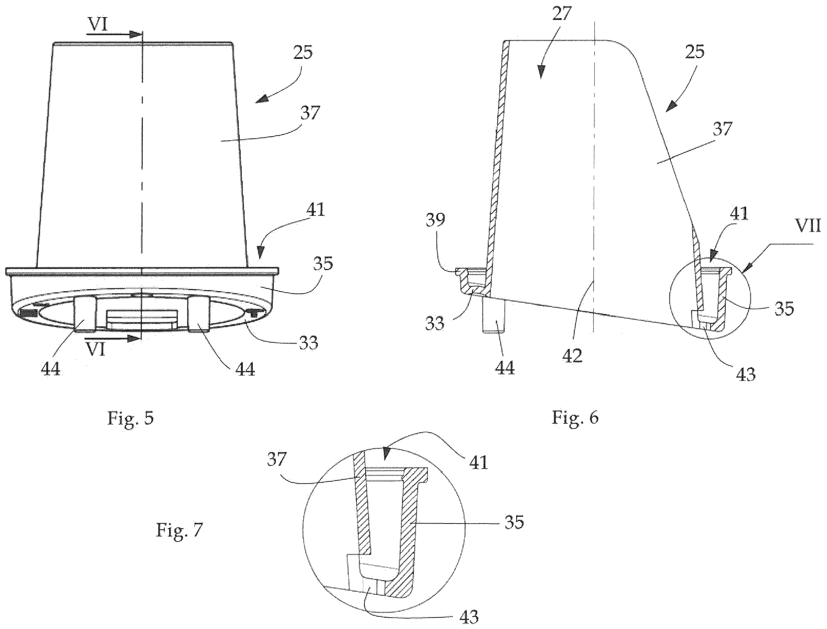

Der erste zylindrische Mantel 35, der Boden 33 und der Ausgiessstutzen 37 begrenzen eine Tropfrinne 41 wie dies insbesondere in den Figuren 6 und 7 gezeigt ist. An der Aussenwand des Ausgiessstutzens 37 herabfliessendes Füllgut, beispielsweise flüssiges Waschmittel, sammelt sich in der Tropfrinne 41. Dadurch, dass der Boden 33 zur Längsachse 42 schräg gestellt ist, kann das Füllgut an der tiefsten Stelle des Bodens 33 zusammenfliessen. Durch eine Rückflussöffnung 43, welche an der tiefsten Stelle des Bodens 33 vorgesehen ist, kann das Füllgut, welches in der Tropfrinne 41 gesammelt wurde, in den Behälterkörper 15 zurückfliessen.

An dem Boden 33 sind Standfüsse 44 vorgesehen. Die Standfüsse 44 ermöglichen es daher, dass das Ausgiesselement auf einer ebenen Fläche aufrecht stehend platziert werden kann, wobei die beiden Standfüsse gemeinsam mit dem unteren Bereich der Rückflussöffnung die Auflagepunkte auf einer solchen Fläche bilden. Dadurch kann das Ausgiesselement 25 stehend ausgerichtet bereitgestellt werden und die Komplettierung des Behälterteils 13 mit dem Ausgiesselement 25 kann automatisch, beispielsweise mit einem Roboter, erfolgen.

Das Ausgiesselement wird bevorzugt im Spritzgussverfahren oder im Formpressverfahren hergestellt und besteht aus den üblicherweise für dieses Verfahren eingesetzten Kunststoffmaterialien, wie z.B. PE, LDPE, LLDPE, HDPE oder PP oder Mischungen aus diesen Materialen.

An der Innenwandung 21 ist auch ein zweites Haltemittel, bevorzugt in Gestalt eines Innengewindes 45, ausgebildet. Das Innengewinde 45 ist bevorzugt näher an dem offenen Ende 47 des Behälterhalses 17 als die Nut 31 angeordnet.

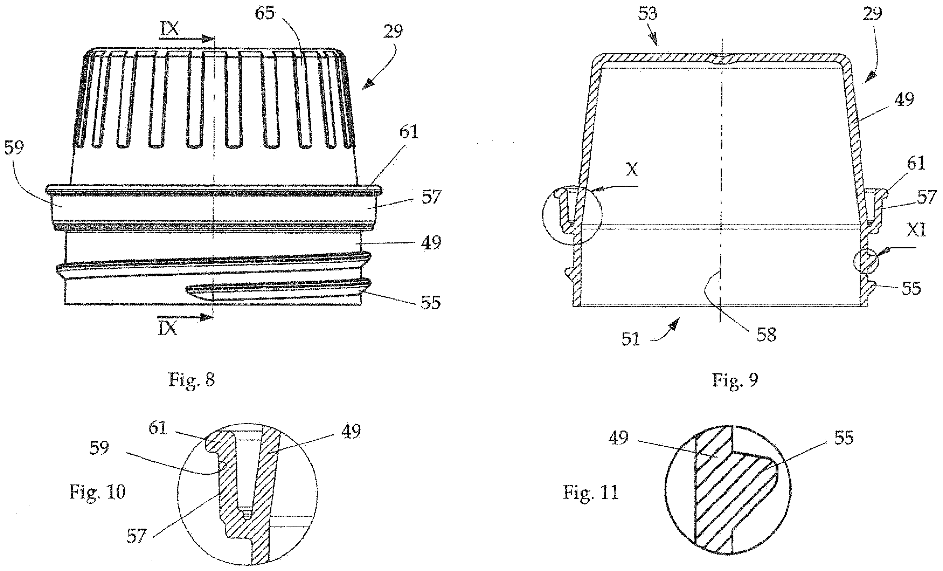

Der Verschluss 29, welcher in den Figuren 8 bis 11 im Detail dargestellt ist, weist einen zweiten zylindrischen Mantel 49 mit einem offenen Ende 51 und einem verschlossenen Ende 53 auf. An der Aussenwandung des zweiten zylindrischen Mantels 49 ist ein Aussengewinde 55 ausgebildet. Das Aussengewinde 55 korrespondiert mit dem Innengewinde 45, wodurch der Verschluss 29 als ein Drehverschluss wirkt und sich in den Behälterhals 17 einschrauben lässt.

An der Aussenwandung des zweiten zylindrischen Mantels 49 ist ein Kragen 57 ausgeformt. Der Kragen 57 besitzt bevorzugt die Form eines dritten zylindrischen Mantels. Der Kragen 57 bzw. der dritte zylindrische Mantel erstreckt sich bevorzugt entlang der Längsachse 58 des Verschlusses 29 bzw. des Kunststoffbehälters 11. An seiner Aussenseite hat der Kragen eine erste Dichtfläche 59 ausgeformt. Die Dichtfläche 59 verläuft im Wesentlichen in Richtung der Innenwandung 21. An dem freien Ende des Kragens 57, also dem Ende, welches nicht an dem zweiten zylindrischen Mantel 49 fixiert ist, ist ein Flansch 61 ausgeformt. Beim Einschrauben des Verschlusses 29 in den Behälterhals 17 wird der Flansch 61 an das offene Ende gepresst, wodurch der Behälterhals 17 gegenüber dem Verschluss 29 abgedichtet wird.

Zwischen dem offenen Ende 47 und dem Innengewinde 45 ist an der Innenwandung 21 eine zweite Dichtfläche 63 ausgebildet. Die zweite Dichtfläche 63 kann mit der ersten Dichtfläche 59 korrespondieren, sodass die beiden Dichtflächen 59, 63 neben dem Kragen Flansch 61 und dem offenen Ende 47 eine weitere Abdichtung zwischen dem Behälterhals 17 und dem Verschluss 29 realisieren. Dazu können die beiden Dichtflächen 59, 63 eine Passung zueinander besitzen, welche klemmend ist. Auch kann eine der beiden Dichtflächen 59, 63 gegenüber der anderen Dichtfläche schräg orientiert sein, um einen dichtenden Übergang herzustellen. Die beiden Dichtflächen 59, 63 bilden daher eine zweite Abdichtung, welche eine verbesserte Dichtfunktion als die erste Abdichtung zwischen der Nut 31 und dem Rastvorsprung 39 besitzt. Der verschlossene Kunststoffbehälter 11 ist daher flüssigkeitsdicht auch wenn er liegt oder auf dem Kopf steht.

An dem zweiten Mantel 49 sind bevorzugt Rippen 65 oder eine ähnliche Struktur ausgebildet, welche eine verbesserte Angriffsfläche beim Ein- und Abschrauben des Verschlusses 29 herstellen.

Der Verschluss 29 wird bevorzugt im Spritzgussverfahren oder im Formpressverfahren hergestellt und besteht aus den üblicherweise für dieses Verfahren eingesetzten Kunststoffmaterialien, wie z.B. PE, LDPE, LLDPE, HDPE oder PP oder Mischungen aus diesen Materialen.

Die Nut 31, das Innengewinde 45 und die zweite Dichtfläche 63 werden während dem bevorzugten Extrusionsblasens des Behälterteils 13 ausgeformt. Dazu wird der Behälterhals 17 durch Schliessen einer Blasform an einen gespreizten Einfallkern und an ein starres Werkzeug gepresst. Der Einfallkern trägt die Negativform der Nut 31 und des Inngewindes 45. Um die zweite Dichtfläche 63 für die Realisierung der Dichtefunktion mit möglichst präzisen Abmessungen bzw. geringen Masstoleranzen herstellen zu können wird der obere Teil des Behälterhalses an das starre Werkzeug gepresst. Nach Ausformung wird der Einfallkern eingefaltet und zusammen mit dem starren Werkzeug aus dem Behälterhals 17 herausgezogen.

### Legende:

- 11: Kunststoffbehälter
- 13: Behälterteil
- 15: Behälterkörper
- 17: Behälterhals
- 19: Griff
- 21: Innenwandung des Behälterhalses
- 23: Aussenwandung des Behälterhalses
- 25: Ausgiesselement
- 27: Ausgiessöffnung
- 29: Verschluss
- 31: Erstes Haltemittel, Nut
- 33: Boden
- 35: Erster zylindrischer Mantel
- 37: Ausgiessstutzen
- 39: Rastvorsprung
- 41: Tropfrinne
- 42: Längsachse
- 43: Rückflussöffnung
- 44: Standfüsse
- 45: Zweites Haltemittel, Innengewinde
- 47: Offenes Ende des Behälterhalses
- 49: Zweiter zylindrischer Mantel
- 51: Offenes Ende des Verschlusses
- 53: Geschlossenes Ende des Verschlusses
- 55: Aussengewinde
- 57: Kragen
- 58: Längsachse des Verschlusses 29 bzw. des Kunststoffbehälters 11
- 59: Erste Dichtfläche
- 61: Flansch
- 63: Zweite Dichtfläche
- 65: Rippen

## Patentansprüche

1. Kunststoffbehälter (11) mit
- einem blasgeformten Behälterteil (13) zur Aufnahme eines Füllgutes, einen Behälterkörper (15) und einen Behälterhals aufweisend, wobei der Behälterhals (17) eine Innenwandung (21) und eine Aussenwandung (23) aufweist,
- einem Ausgiesselement (25), welches an dem Behälterhals (17) montierbar ist und eine Ausgiessöffnung (27) aufweist, und
- einem Verschluss (29), mit welchem der Kunststoffbehälter (11) verschliessbar ist, wobei an der Innenwandung (21) des Behälterhalses (17) ein erstes und zweites Haltemittel (31, 45) ausgebildet sind, wobei das erste Haltemittel (31) dazu ausgebildet ist das Ausgiesselement (25) in dem Behälterhals (17) zu halten und das zweite Haltemittel (45) dazu ausgebildet ist, den Verschluss (29) in dem Behälterhals (17) zu halten
**dadurch gekennzeichnet,**
**dass** das erste Haltemittel (31) derart ausgebildet ist, dass das erste Haltemittel (31) und das Ausgiesselement (25) formschlüssig verrastbar sind, wobei das erste Haltemittel eine in Umfangsrichtung der Innenwandung (21) verlaufende Nut (31) ist.

2. Kunststoffbehälter nach Anspruch 1, **dadurch gekennzeichnet, dass** das Ausgiesselement (25) einen ersten zylindrischen Mantel (35), einen Boden (33) und einen von dem Boden (33) innerhalb des Mantels (35) abragenden Ausgiessstutzen (37) aufweist, wobei an der Aussenwandung des Mantels (35) ein Rastvorsprung (39) ausgebildet ist, welcher mit der Nut (31) zusammenwirkt, wodurch zwischen der Nut (31) und dem Rastvorsprung (39) eine Halterung und eine erste Abdichtung gebildet ist.

3. Kunststoffbehälter nach Anspruch 2, **dadurch gekennzeichnet, dass** der Boden (33) relativ zur Längsachse des Ausgiesselements (25) schräg gestellt ist und an dem tiefsten Punkt relativ zu der Längsachse eine Rückflussöffnung (43) in dem Boden (33) vorgesehen ist.

4. Kunststoffbehälter nach einem der vorangehenden Ansprüche, **dadurch gekennzeichnet, dass** das zweite Haltemittel ein Innengewinde (45) ist.

5. Kunststoffbehälter nach Anspruch 4, **dadurch gekennzeichnet, dass** sich die Nut (31) radial weiter nach innen in Richtung zur Längsachse (58) hin erstreckt als die Gewindegänge des Innengewindes (45).

6. Kunststoffbehälter nach Anspruch 4 oder 5, **dadurch gekennzeichnet, dass** die Gewindegänge des Innengewindes (45) abschnittsweise unterbrochen sind.

7. Kunststoffbehälter nach einem der vorangehenden Ansprüche, **dadurch gekennzeichnet, dass** der Verschluss (29) einen zweiten zylindrischen Mantel (49) mit einem offenen und einem verschlossenen Ende aufweist, wobei an der Aussenwandung des zweiten zylindrischen Mantels (49) ein Aussengewinde (55) ausgebildet ist.

8. Kunststoffbehälter nach einem der vorangehenden Ansprüche, **dadurch gekennzeichnet, dass** ausgehend vom offenen Ende des Behälterhalses (17) zuerst das zweite Haltemittel (45) und dann das erste Haltemittel (31) an der Innenwandung (21) ausgebildet sind.

9. Kunststoffbehälter nach einem der Ansprüche 7 oder 8, **dadurch gekennzeichnet, dass** an der Aussenwandung des zweiten Mantels (49) ein Kragen (57) mit einer ersten im Wesentlichen in Richtung der Innenwandung (21) des Behälterhalses (17) verlaufenden erste Dichtfläche (59) ausgeformt ist.

10. Kunststoffbehälter nach Anspruch 9, **dadurch gekennzeichnet, dass** an dem freien Ende des Kragens (57) ein in Umfangsrichtung verlaufender Flansch (61) ausgeformt ist.

11. Kunststoffbehälter nach einem der Ansprüche 9 oder 10 **dadurch gekennzeichnet, dass** zwischen dem offenen Ende des Behälterhalses (17) und dem ersten und zweiten Haltemittel (31, 45) an der Innenwandung (21) eine zweite Dichtfläche (63) ausgebildet ist.

12. Kunststoffbehälter nach Anspruch 11, **dadurch gekennzeichnet, dass** die erste und die zweite Dichtfläche (59, 63) derartig bemasst und/oder zueinander orientiert sind, dass diese füllgutdicht miteinander korrespondieren und eine zweite Abdichtung bilden.

13. Kunststoffbehälter nach einem der vorangehenden Ansprüche, **dadurch gekennzeichnet, dass** das erste und zweite Haltemittel (31,45) durch Anlage an einem Einfallkern ausgeformt sind.

14. Kunststoffbehälter nach einem der Ansprüche 11 bis 12 **dadurch gekennzeichnet, dass** die zweite Dichtfläche (63) durch Anlage an einem starren Form-Werkzeug ausgeformt ist.

15. Verfahren zur Herstellung eines Kunststoff-Behälterteils (13) gemäß einem der Ansprüche 1-14, einen Behälterkörper (15) und einen Behälterhals (17) aufweisend, wobei der Behälterhals (17) eine Innenwandung (21) und eine Aussenwandung (23) aufweist, nach den folgenden Verfahrensschritten:
- Extrudieren eines Schlauches mit einem Extruder,
- Übergeben des extrudierten Schlauches an eine Blasformwerkzeuganordnung, wobei die Blasform bei der Übergabe des Schlauches geöffnet ist,
- Einfahren eines Einfallkerns, welcher sich in seiner gespreizten Position befindet,
- Schliessen der Blasform mit Verpressen des zwischen Einfallkern und Blasform befindlichen Abschnitts des Schlauchs, wodurch ein erstes und zweites Haltemittel (31, 45) an der Innenwandung (21) des Behälterhalses (17) ausgeformt wird,
- Aufblasen des Schlauches in der Blasform,
- Öffnen der Blasform und Überführen des Einfallkerns in seine eingefallene Position,
- Ausfahren des Einfallkerns in der eingefallenen Position und
- Entformen des Behälterteils (13).

16. Verfahren nach Anspruch 15, **dadurch gekennzeichnet, dass** zusätzlich zu dem Einfallkern ein starres Form-Werkzeug an der Seite des Schlauches, an der der Behälterhals (17) ausgeformt wird, eingefahren wird und dieses nach Aufblasen des Schlauches ausgefahren wird, wodurch eine Dichtfläche (63) an der Innenwandung (21) des Behälterhalses (17) ausgeformt wird.

## Claims

1. Plastic container (11) with
- a blow molded container part (13) for receiving a filling material, comprising a container body (15) and a container neck, wherein the container neck (17) comprises an inner wall (21) and an outer wall (23),
- a pouring element (25) that can be mounted on the container neck (17) and that has a pouring opening (27) and
- a closure (29) with which the plastic container (11) can be closed, wherein a first holding means and a second holding means (31, 45) are formed on the inner wall (21) of the container neck (17), wherein the first holding means (31) is formed to hold the pouring element (25) in the container neck (17) and the second holding means (45) is formed to hold the closure (29) in the container neck (17),
**characterized in**
**that** the first holding means (31) is formed in such a way that the first holding means (31) and the pouring element (25) can be locked in a form-fitting manner, wherein the first holding means is a groove (31) extending in the circumferential direction of the inner wall (21).

2. Plastic container according to claim 1, **characterized in that** the pouring element (25) comprises a first cylindrical jacket (35), a base (33) and a pouring spout (37) protruding from the base (33) inside the jacket (35), wherein a locking projection (39) that interacts with the groove (31) is formed on the outer wall of the jacket (35) so that a holder and a first seal are formed between the groove (31) and the locking projection (39).

3. Plastic container according to claim 2, **characterized in that** the base (33) is inclined relative to the longitudinal axis of the pouring element (25) and a backflow opening (43) is provided in the base (33) at the lowest point relative to the longitudinal axis.

4. Plastic container according to one of the preceding claims, **characterized in that** the second holding means is an inner thread.

5. Plastic container according to claim 4, **characterized in that** the groove (31) extends radially further inwards in direction of the longitudinal axis (58) than the thread turns of the inner thread (45).

6. Plastic container according to claim 4 or 5, **characterized in that** the thread turns of the inner thread (45) are interrupted in sections.

7. Plastic container according to one of the preceding claims, **characterized in that** the closure (29) comprises a second cylindrical jacket (49) with an open and a closed end, wherein an outer thread (55) is formed on the outer wall of the second cylindrical jacket (49).

8. Plastic container according to one of the preceding claims, **characterized in that**, starting from the open end of the container neck (17), first the second holding means (45) and then the first holding means (31) are formed on the inner wall (21).

9. Plastic container according to one of the claims 7 or 8, **characterized in that** a collar (57) with a first sealing surface (59) substantially extending in direction of the inner wall (21) of the container neck (17) is formed on the outer wall of the second jacket (49).

10. Plastic container according to claim 9, **characterized in that** a flange (61) extending in the circumferential direction is formed at the free end of the collar (57).

11. Plastic container according to one of the claims 9 or 10, **characterized in that** a second sealing surface (63) is formed on the inner wall (21) between the open end of the container neck (17) and the first and second holding means (31, 45).

12. Plastic container according to claim 11, **characterized in that** the first and the second sealing surface (59, 63) are dimensioned and/or oriented relative to one another in such a way that they correspond to one another in being tight to the filling material and that they form a second seal.

13. Plastic container according to one of the preceding claims, **characterized in that** the first and the second holding means (31, 45) are formed by resting on a collapsible core.

14. Plastic container according to one of the claims 11 to 12, **characterized in that** the second sealing surface (63) is formed by resting on a rigid molding tool.

15. Method for manufacturing a plastic container part (13) according to one of the claims 1 to 14 comprising a container body (15) and a container neck (17), wherein the container neck (17) comprises an inner wall (21) and an outer wall (23), according to the following process steps:
- extrusion of a hose with an extruder,
- transfer of the extruded hose to a blow molding tool arrangement, wherein the blowing mold is opened when transferring the hose,
- introduction of a collapsible core that is in its spread position,
- closing of the blow mold with compression of the section of the hose that is located between the collapsible core and the blow mold so that a first and a second holding means (31, 45) are formed on the inner wall (21) of the container neck (17),
- blowing of the hose in the blow mold,
- opening of the blow mold and transfer of the collapsible core into its collapsed position,
- removal of the collapsible core in the collapsed position and
- demolding of the container part (13).

16. Method according to claim 15, **characterized in that** a rigid molding tool is introduced additionally to the collapsible core on the side of the hose on which the container neck (17) is molded and that it is removed after blowing of the hose so that a sealing surface (63) is formed on the inner wall (21) of the container neck (17).

## Revendications

1. Récipient en matière plastique (11) avec
- une partie de récipient moulée par soufflage (13) pour recevoir une matière de remplissage, présentant un corps de récipient (15) et un col de récipient, cependant que le col de récipient (17) présente une paroi intérieure (21) et une paroi extérieure (23),
- un élément verseur (25) qui peut être monté sur le col du récipient (17) et qui présente une ouverture verseuse (27) et
- une fermeture (29) avec laquelle le récipient en matière plastique (11) peut être fermé, cependant qu'un premier moyen de retenue et un second moyen de retenue (31, 45) sont configurés sur la paroi intérieure (21) du col du récipient (17), le premier moyen de retenue (31) étant configuré pour retenir l'élément verseur (25) dans le col du récipient (17) et le second moyen de retenue (45) étant configuré pour retenir la fermeture (29) dans le col du récipient (17),
**caractérisé en ce**
**que** le premier moyen de retenue (31) est configuré de telle manière que le premier moyen de retenue (31) et l'élément verseur (25) peuvent être encliquetés par complémentarité de formes, le premier moyen de retenue étant une gorge (31) qui s'étend dans le sens circonférentiel de la paroi intérieure (21).

2. Récipient en matière plastique selon la revendication 1, **caractérisé en ce que** l'élément verseur (25) présente une première enveloppe cylindrique (35), un fond (33) et un ajutage verseur (37) qui part du fond (33) à l'intérieur de l'enveloppe (35), cependant qu'une saillie d'enclenchement (39) est configurée sur la paroi extérieure de l'enveloppe (35), saillie qui coopère avec la gorge (31) si bien qu'un support et une première étanchéité se forment entre la gorge (31) et la saillie d'enclenchement (39).

3. Récipient en matière plastique selon la revendication 2, **caractérisé en ce que** le fond (33) est incliné par rapport à l'axe longitudinal de l'élément verseur (25) et qu'une ouverture de reflux (43) est prévue sur le gond au point le plus bas par rapport à l'axe longitudinal.

4. Récipient en matière plastique selon l'une des revendications précédentes, **caractérisé en ce que** le second moyen de retenue est un filet intérieur (45).

5. Récipient en matière plastique selon la revendication 4, **caractérisé en ce que** la gorge (31) s'étend radialement plus vers l'intérieur en direction de l'axe longitudinal (58) que les spires du filet intérieur (45).

6. Récipient en matière plastique selon la revendication 4 ou 5, **caractérisé en ce que** les spires du filet intérieur (45) sont interrompues par sections.

7. Récipient en matière plastique selon l'une des revendications précédentes, **caractérisé en ce que** la fermeture (29) présente une seconde enveloppe cylindrique (49) avec une extrémité ouverte et une extrémité fermée, cependant qu'un filet extérieur (55) est configuré sur la paroi extérieure de la seconde enveloppe cylindrique (49).

8. Récipient en matière plastique selon l'une des revendications précédentes, **caractérisé en ce que**, partant de l'extrémité ouverte du col du récipient (17), tout d'abord le second moyen de retenue (45) et ensuite le premier moyen de retenue (31) sont configurés sur la paroi intérieure.

9. Récipient en matière plastique selon l'une des revendications 7 ou 8, **caractérisé en ce qu'**une collerette (57) avec une première surface d'étanchéité (59) qui s'étend sensiblement en direction de la paroi intérieure (21) du col du récipient (17) est moulée sur la paroi extérieure de la seconde enveloppe (49).

10. Récipient en matière plastique selon la revendication 9, **caractérisé en ce qu'**une bride (61) qui s'étend dans le sens circonférentiel est moulée à l'extrémité libre de la collerette (57).

11. Récipient en matière plastique selon l'une des revendications 9 ou 10, **caractérisé en ce qu'**une seconde surface d'étanchéité (63) est configurée sur la paroi intérieure entre l'extrémité libre du col du récipient (17) et le premier et le second moyen de retenue (31, 45).

12. Récipient en matière plastique selon la revendication 11, **caractérisé en ce que** la première et la seconde surface d'étanchéité (59, 63) sont dimensionnées et/ou orientées l'une par rapport à l'autre de telle manière qu'elles correspondent l'une à l'autre en étant étanches à la matière de remplissage et qu'elles forment une seconde étanchéité.

13. Récipient en matière plastique selon l'une des revendications précédentes, **caractérisé en ce que** le premier et le second moyen de retenue (31, 45) sont moulés en prenant appui sur un noyau déformable.

14. Récipient en matière plastique selon l'une des revendications 11 à 12, **caractérisé en ce que** la seconde surface d'étanchéité (63) est moulée en prenant appui sur un outil de moulage rigide.

15. Procédé pour la fabrication d'un récipient en matière plastique (13) selon l'une des revendications 1 à 14 qui présente un corps de récipient (15) et un col de récipient (17), cependant que le col de récipient (17) présente une paroi intérieure (21) et une paroi extérieure (23), selon les étapes de procédé suivantes :
- extrusion d'un tuyau avec une extrudeuse,
- transfert du tuyau extrudé à un ensemble d'outil de moulage par soufflage, le moule de soufflage étant ouvert lors du transfert du tuyau,
- introduction d'un noyau déformable qui se trouve dans sa position étalée,
- fermeture du moule de soufflage avec compression de la section de tuyau qui se trouve entre le noyau déformable et le moule de soufflage si bien qu'un premier moyen de retenue et un second moyen de retenue (31, 45) sont moulés sur la paroi intérieure (21) du col du récipient (17),
- soufflage du tuyau dans le moule de soufflage,
- ouverture du moule de soufflage et transfert du noyau déformable dans sa position rétractée,
- sortie du noyau déformable dans sa position rétractée et
- démoulage du récipient (13).

16. Procédé selon la revendication 15, **caractérisé en ce qu'**un outil de moulage rigide est introduit en plus du noyau déformable sur le côté du tuyau sur lequel le col du récipient (17) est moulé et que celui-ci est sortie après soufflage du tuyau si bien qu'une surface d'étanchéité (63) est moulée sur la paroi intérieure (21) du col du récipient (17).
